Europäisches Patentamt

European Patent Office

Office européen des brevets

(11) Veröffentlichungsnummer: **0 254 872 B1**

(12) **EUROPÄISCHE PATENTSCHRIFT**

(45) Veröffentlichungstag der Patentschrift: 02.10.91    (51) Int. Cl.⁵: **B32B 3/12**

(21) Anmeldenummer: 87109097.3

(22) Anmeldetag: 24.06.87

(54) **Verkleidungselement.**

(30) Priorität: 15.07.86 DE 3623760

(43) Veröffentlichungstag der Anmeldung:
03.02.88 Patentblatt 88/05

(45) Bekanntmachung des Hinweises auf die
Patenterteilung:
02.10.91 Patentblatt 91/40

(84) Benannte Vertragsstaaten:
AT BE CH DE FR GB LI NL

(56) Entgegenhaltungen:
EP-A- 0 075 033
CH-A- 417 015
FR-A- 2 563 153
US-A- 3 963 846

(73) Patentinhaber: PROMAT GmbH
Scheifenkamp 16
W-4030 Ratingen 1(DE)

(72) Erfinder: Bergmann, Hansjürgen, Dr.,
Dipl.-Ing.
Wolfersstrasse 17
W-4150 Krefeld 1(DE)
Erfinder: Marx, Hans-Peter
Heinestrasse 31
W-4020 Mettmann(DE)

(74) Vertreter: Hennicke, Albrecht, Dipl.-Ing. et al
Patentanwälte Dipl.-Ing. Buschhoff Dipl.-Ing.
Hennicke Dipl.-Ing. Vollbach Kaiser-
Wilhelm-Ring 24 Postfach 190 408
W-5000 Köln 1(DE)

## Beschreibung

Die Erfindung betrifft ein Verkleidungselement, insbesondere zur Verkleidung von Gebäudefassaden, mit einer dünnen Platte aus einem schweren, zerbrechlichen Material, insbesondere einer Steinplatte, und einer hinter diese zerbrechliche Platte geklebten Verstärkungsschicht, die eine Zellstrukturplatte aufweist, welche mindestens auf ihrer der zerbrechlichen Platte abgewandten Seite mit einer aus harzgetränkten, anorganischen Faserstoffen bestehenden Abdeckplatte verklebt ist.

Es ist ein Verkleidungselement dieser Art bekannt (US-PS 3 963 846), bei der die Zellstrukturplatte aus Papier oder einer dünnen Metallfolie hergestellt ist. Die Abdeckplatten bestehen aus harzimprägnierten Hartfaserplatten oder aus harzgetränktem Glasfasergewebe. Bei Verwendung derartiger Abdeckplatten sind die zusammengesetzten Verkleidungselemente noch verhältnismäßig schwer und haben keine sehr hohe Biegezugfestigkeit, da diese allein von der Zugfestigkeit der Abdeckplatten abhängig ist, die weder bei Hartfaserplatten noch bei harzgetränkten Gewebeplatten besonders hoch ist. Gewebeplatten haben die Neigung, sich zu dehnen, wenn sie in Richtung von Kette oder Schuß beansprucht werden, da die durch die Gewebebindung abgekröpften Fäden zunächst bestrebt sind, sich zu strecken, bevor sie größere Kräfte aufnehmen. Bei Hartfaserplatten wiederum liegen die einzelnen Fasern ungerichtet im Inneren der Platte und sind nur durch den Kleber miteinander verbunden, der die gesamten Zugkräfte aufnehmen und übertragen muß, wobei bei großformatigen Fasern auch ein Bruch in den Faserstoffen selbst möglich ist.

Vor allem aber nehmen sowohl Hartfaserplatten als auch harzgetränkte Gewebeplatten sehr große Mengen an Harz bzw. Bindemittel auf, die stark schwinden und wodurch diese Abdeckplatten ein hohes Gewichterhalten.

Ferner ist es aus der europäischen Patentanmeldung 0 075 033 eine Leichtbauplatte bekannt, bei der eine Kernplatte mit Honigwabenstruktur auf beiden Seiten mit faserverstärkten Kunststoffbeschichtungen abgedeckt ist. Als Verstärkung für die Kunsttoffschicht können entweder ungerichtete Stapelfasern, d.h. kurze Faserabschnitte aus Glasfasern, Kohlefasern oder Zellulosefasern verwendet werden, oder es wird zur Verstärkung der Kunststoffschicht entweder ein Gewebe oder ein unidirektionales Fasergelege eingesetzt.

Aufgabe der Erfindung ist es, diese Nachteile zu vermeiden und ein Verkleidungselement zu schaffen, das eine zwar schwere und spröde, aber sehr harte und gegen Umwelteinflüsse widerstandsfähige Oberfläche hat, wie dies beispielsweise bei Natursteinplatten, Glas oder Kunststeinplatten der Fall ist, das aber andererseits so leicht ist, daß es auch in größeren Abmessungen leicht gehandhabt werden kann und das eine so hohe Steifigkeit und Beigezugfestigkeit besitzt, daß die Bruchgefährdung der mit ihr verbundenen, zerbrechlichen Platte aufgehoben ist.

Diese Aufgabe wird mit der Erfindung dadurch gelöst, daß die Abdeckplatte aus mehreren, übereinander angeordneten phenolharzgebundenen, unidirektionalen Faserlegen $(UD_1)$, $(UD_2)$ besteht, die vollflächig miteinander verbunden sind und von denen mindestens zwei unter verschieden Winkeln zueinander angeordnet sind.

Der Harzanteil derartiger unidirektionaler Fasergelege ist sehr gering, da alle Fasern zueinander parallel verlaufen und nur durch schmale, auf einer Seite aufgeheftete Querbänder zusammengehalten werden. Die gesamte Verstärkungsschicht wird hierdurch sehr leicht, wenn zweckmäßig auch Zellstrukturplatten aus dünnen, steifen Metall- oder Kunststoffolien verwendet werden. Außerdem hat jedes Fasergelege in Längsrichtung seiner Fasern eine sehr hohe Zugfestigkeit, die wesentlich größer ist als die Zugfestigkeit eines Gewebes oder einer Hartfaserplatte, obgleich die Fasergelege sehr viel dünner sind als diese.

Die Fasergelege können nicht nur, wie bei Geweben, unter einem rechten Winkel, sondern auch unter spitzen Winkeln zueinander angeordnet und der Beanspruchung des Verkleidungselementes angepaßt werden, wobei zwei oder auch mehr Lagen Fasergelege für eine Abdeckplatte übereinander unter verschiedenen Winkeln angeordnet werden können. Hierbei ist es zweckmäßig, wenn alle Fasern der verschiedenen Fasergelege durch eine einzige Harztränkung miteinander verbunden werden. Um Biegezugkräfte mit verschiedenen Hauptzugrichtungen aufnehmen zu können, ist es zweckmäßig, wenn die Fasergelege in Richtung der im Verkleidungselement zu erwartenden Hauptzugspannungen verlaufen.

Hierzu ist darauf hinzuweisen, daß die Fasern der einzelnen Gelege zwar einander kreuzen, aber nicht miteinander verwebt oder verflochten sind, so daß die Fasern einer jeden Lage geradlinig durchlaufen und hierdurch in schon gestrecktem Zustand die ihnen zugedachten Kräfte aufnehmen.

Um eine Platte besonders hoher Biegezugfestigkeit zu erhalten und eine feste Verbindung mit der zerbrechlichen Platte herzustellen, ist es vorteilhaft, wenn beide Seiten der Zellstrukturplatte mit Abdeckplatten verbunden sind, von denen die eine mit der zerbrechlichen Platte vollflächig verklebt ist.

Weitere Merkmale und Vorteile der Erfindung ergeben sich aus der nachfolgenden Beschreibung und der Zeichnung, in denen eine bevorzugte Ausführungsform der Erfindung an einem Beispiel näher erläutert ist. Es zeigt:

Fig. 1    ein Verkleidungselement nach der Erfindung in einer perspektivischen Darstellung,

Fig. 2    eine andere Ausführungsform des Verkleidungselementes nach der Erfindung, bei dem die dem Beschauer zugewandte Abdeckplatte aus zwei unter einem spitzen Winkel zueinander verlaufenden Fasergelegen besteht, und

Fig. 3    eine Draufsicht auf eines der Fasergelege, aus denen die Abdeckplatte aufgebaut ist, in einer Teildarstellung.

In den Zeichnungen ist mit 10 ein Verkleidungselement bezeichnet, das mit mehreren anderen, gleichartigen Verkleidungselementen für die Verkleidung einer Hausfassade bestimmt ist. Das Verkleidungselement 10 besteht aus einer dünnen Natursteinplatte 11, die etwa 5 mm bis 8 mm dick ist. Da eine solche dünne Steinplatte zwar eine harte Oberfläche aufweist, aber leicht zerbrechlich ist, ist sie mit einer Verstärkungsschicht versehen, die in ihrer Gesamtheit mit 12 bezeichnet ist. Diese Verstärkungsschicht 12 besteht aus einer Zellstrukturplatte 13, deren einzelne, bei der dargestellten Ausführungsform im Grundriß sechseckige, wabenförmige Zellen 14 senkrecht zur Platte 11 verlaufen. Hierbei bestehen die Zellwände aus dünnem Aluminium- oder Stahlblech oder auch aus einer harten Kunststoffolie. Derartige Zellstrukturplatten sind an sich bekannt.

An ihrer der zerbrechlichen Platte 11 zugewandten Unterseite und auf ihrer der Platte 11 abgewandten Seite ist die Zellstrukturplatte 13 mit je einer Abdeckplatte 15 fest verklebt.

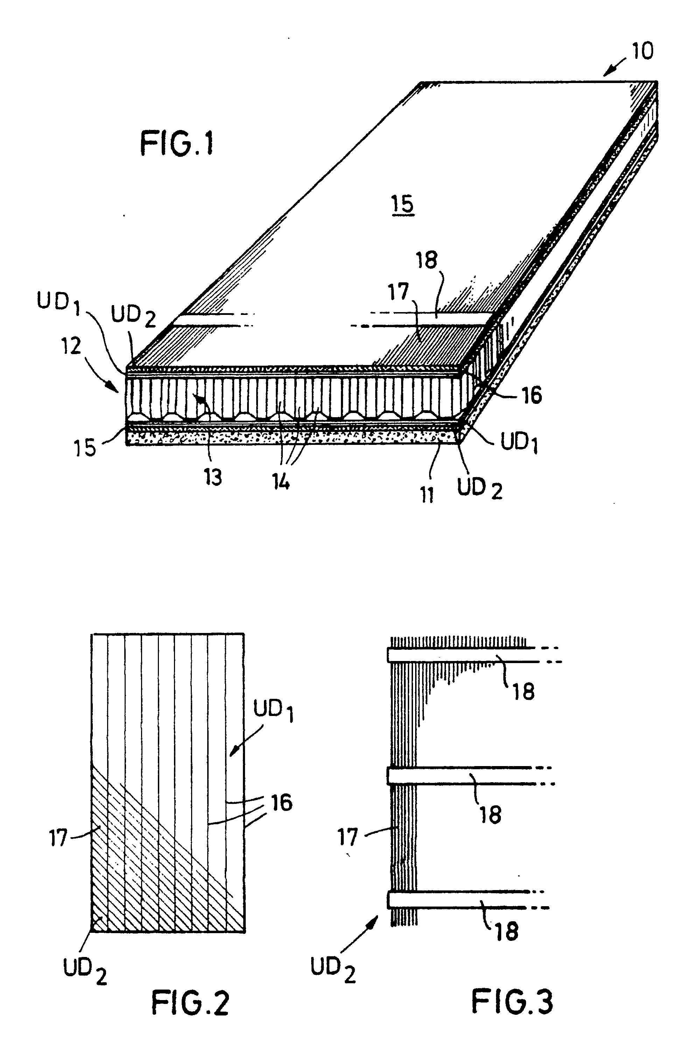

Jede Abdeckplatte 15 besteht aus zwei phenolharzgebundenen, unidirektionalen Fasergelegen $UD_1$ und $UD_2$, die vollflächig miteinander verbunden vorzugsweise in die gleiche Phenolharzschicht eingebettet sind. Die Fasern 16 des inneren Fasergeleges $UD_1$ verlaufen bei dem in Fig. 1 dargestellten Ausführungsbeispiel senkrecht zu den Fasern 17 der äußeren Fasergelege $UD_2$, während sie bei dem in Fig. 2 dargestellten Ausführungsbeispiel unter einem spitzen Winkel zueinander angeordnet sind.

Wie aus Fig. 3 hervorgeht, sind alle Fasern 16 bzw. 17 eines Fasergeleges parallel nebeneinander angeordnet, laufen geradlinig durch und sind durch schmale Bänder 18 auf Harz, Kunststoffolie oder einem anderen Material miteinander verbunden, so daß sie sich nicht seitlich gegeneinander verschieben können. Sie sind zusammen mit diesen Bändern vollständig in Phenolharz eingebettet.

Bei der hier dargestellten Ausführungsform sind die Fasern der Fasergelege $UD_1$ und $UD_2$ Glasfasern. Statt dessen können aber auch Kohlenstoffasern oder Aramidfasern verwendet werden.

Bei dem in Fig. 1 dargestellten Ausführungsbeispiel ist die Platte 11 aus zerbrechlichem Material vollflächig mit der ihr zugekehrten Oberfläche der inneren Abdeckplatte 15 verklebt, wozu ein geeigneter Kleber, beispielsweise ein Phenolharzkleber, verwendet werden kann. Es ist aber auch möglich, zwischen der zerbrechlichen Platte 11 und der Verstärkungsschicht die Abdeckplatte 15 fortzulassen und die Waben der Zellstrukturplatte unmittelbar mit ihren Stirnrändern auf die Steinplatte 11 aufzukleben.

Die Erfindung ist nicht auf die dargestellten und beschriebenen Ausführungsformen beschränkt, sondern es sind mehrere Änderungen und Ergänzungen möglich, ohne den Rahmen der Erfindung zu verlassen. Beispielsweise kann die zerbrechliche Platte auch eine Glasplatte oder eine Spiegelplatte sein. Auch Keramikplatten können verwendet werden. Ferner ist es auch möglich, jede Abdeckplatte aus drei oder noch mehr Lagen von Fasergelegen aufzubauen und entweder alle oder einige Faserschichten gemeinsam in Phenolharz einzubetten. Ferner ist es auch möglich, einzelne, separat hergestellte, phenolharzgetränkte Fasergelege separat zu verkleben, was insbesondere dann vorteilhaft ist, wenn bereits hergestellte Verkleidungselemente nachträglich einer besonderen Beanspruchungsart angepaßt werden sollen, bei der die Hauptzugkräfte in anderen Richtungen verlaufen, als dies der Richtung der bereits eingebauten Fasergelege entspricht.

**Patentansprüche**

1.    Verkleidungselement, insbesondere zur Verkleidung von Gebäudefassaden, mit einer dünnen Platte aus einem schweren, zerbrechlichen Material, insbesondere einer Steinplatte (11), und einer hinter diese zerbrechliche Platte geklebten Verstärkungsschicht (12), die eine Zellstrukturplatte aufweist, welche mindestens auf ihrer der zerbrechlichen Platte abgewandten Seite mit einer aus harzgetränkten, anorganischen Faserstoffen bestehenden Abdeckplatte verklebt ist, **dadurch gekennzeichnet,** daß die Abdeckplatte (15) aus mehreren, übereinander angeordneten, phenolharzgebundenen, unidirektionalen Fasergelegen ($UD_1$, $UD_2$) besteht, die vollflächig miteinander verbunden sind und von denen mindestens zwei unter verschiedenen Winkeln zueinander angeordnet sind.

2.    Element nach Anspruch 1, **dadurch gekennzeichnet,** daß die Fasergelege ($UD_1$ und $UD_2$) in Richtung der im Verkleidungselement zu erwartenden Hauptzugspannungen verlaufen.

3. Element nach Anspruch 1 oder 2, **dadurch gekennzeichnet,** daß beide Seiten der Zellstrukturplatte (13) mit Abdeckplatten (15) verbunden sind, von denen die eine mit der zerbrechlichen Platte (11) vollflächig verklebt ist.

## Claims

1. Cladding element, in particular for cladding building façades, with a thin slab made of a dense, brittle material, in particular a stone slab (11), and a reinforcing layer (12) which is glued behind this brittle slab and has a cellular structure slab which, at least on its side facing away from the brittle slab, is glued to a covering slab consisting of resin-impregnated inorganic fibrous materials, characterized in that the covering slab (15) consists of a plurality of phenolic-resin-bonded, unidirectional, fibre layers (UD$_1$, UD$_2$) which are positioned on top of one another and which are bonded to one another over the entire surface and at least two of which are positioned at different angles to one another.

2. Element according to Claim 1, characterized in that the fibre layers (UD$_1$ and UD$_2$) run in the direction of the principal tensile stresses to be expected in the cladding element.

3. Element according to Claim 1 or 2, characterized in that both sides of the cellular structure slab (13) are bonded to covering slabs (15) the entire surface of one of which is glued to the brittle slab (11).

## Revendications

1. Elément d'habillage, en particulier pour l'habillage de façades de bâtiments, avec une mince plaque d'un matériau lourd et cassant, en particulier une plaque en pierre (11), et une couche de renforcement (12) collée à l'arrière de cette plaque cassante et présentant une plaque à structure cellulaire, assemblée par collage, au moins de son côté détourné de la plaque cassante, avec une plaque de recouvrement composée de matières fibreuses inorganiques imprégnées de résine, caractérisé en ce que la plaque de recouvrement (15) consiste en plusieurs dépôts de fibres unidirectionnels superposés, liés à la résine phénolique (UD$_1$, UD$_2$), qui sont collés ensemble sur toute leur surface et dont deux au moins sont disposés sous des angles différents l'un de l'autre.

2. Elément selon la revendication 1, caractérisé en ce que les dépôts de fibres (UD$_1$ et UD$_2$) s'étendent dans la direction des tensions principales présumées dans l'élément d'habillage.

3. Elément selon la revendication 1 ou 2, caractérisé en ce que les deux faces de la plaque à structure cellulaire (13) sont liées avec des plaques de recouvrement (15) dont l'une est assemblée par collage sur toute la surface avec la plaque cassante (11).

FIG.1

FIG.2

FIG.3